(19) Europäisches Patentamt / European Patent Office / Office européen des brevets

(11) **EP 4 148 826 A1**

(12) **EUROPEAN PATENT APPLICATION**
published in accordance with Art. 153(4) EPC

(43) Date of publication:
**15.03.2023 Bulletin 2023/11**

(21) Application number: **21821799.0**

(22) Date of filing: **11.06.2021**

(51) International Patent Classification (IPC):
$H01M\ 4/36$ (2006.01)   $H01M\ 4/62$ (2006.01)
$H01M\ 4/525$ (2010.01)   $H01M\ 4/505$ (2010.01)
$H01M\ 10/052$ (2010.01)

(52) Cooperative Patent Classification (CPC):
H01M 4/36; H01M 4/505; H01M 4/525; H01M 4/62;
H01M 10/052; Y02E 60/10

(86) International application number:
**PCT/KR2021/007318**

(87) International publication number:
**WO 2021/251786 (16.12.2021 Gazette 2021/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.06.2020   KR 20200071473
09.06.2021   KR 20210074551**

(71) Applicant: **ECOPRO BM CO., LTD.
Cheongju-si, Chungcheongbuk-do 28116 (KR)**

(72) Inventors:
• **LEE, Chang Woo
  Cheongju-si, Chungcheongbuk-do 28116 (KR)**

• **CHOI, Moon Ho
  Cheongju-si, Chungcheongbuk-do 28116 (KR)**
• **YU, Hyun Jong
  Cheongju-si, Chungcheongbuk-do 28116 (KR)**
• **PARK, Young Nam
  Cheongju-si, Chungcheongbuk-do 28116 (KR)**
• **PARK, Jung Bae
  Cheongju-si, Chungcheongbuk-do 28116 (KR)**
• **JEON, Jae Woo
  Cheongju-si, Chungcheongbuk-do 28116 (KR)**

(74) Representative: **BCKIP Part mbB
Siegfriedstraße 8
80803 München (DE)**

(54) **CATHODE ACTIVE MATERIAL AND LITHIUM SECONDARY BATTERY COMPRISING SAME**

(57) The present invention relates to a positive electrode active material which includes a lithium composite oxide with improved electrochemical properties and stability and a lithium secondary battery including the same, and more particularly, to a positive electrode active material which is improved in electrochemical characteristics and stability by removing at least a part of a coating layer present on the surface of the lithium composite oxide and lithium-containing impurities, and a lithium secondary battery including the same.

FIG. 1

EP 4 148 826 A1

**Description**

BACKGROUND

**1. Field of the Invention**

The present invention relates to a positive electrode active material which includes a lithium composite oxide with improved electrochemical properties and stability and a lithium secondary battery including the same, and more particularly, to a positive electrode active material which is improved in electrochemical characteristics and stability by removing at least a part of a coating layer present on the surface of the lithium composite oxide and lithium-containing impurities, and a lithium secondary battery including the same.

**2. Discussion of Related Art**

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials, and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be $LiCoO_2$, $LiMn_2O_4$, $LiNiO_2$, $LiMnO_2$, or an oxide in which Ni, Co, Mn or Al is complexed.

Among the positive electrode active materials, $LiCoO_2$ is most widely used due to excellent lifetime characteristics and charge/discharge efficiency, but it is expensive due to cobalt being a limited resource, which is used as a raw material, and thus has a disadvantage of limited price competitiveness.

Lithium manganese oxides such as $LiMnO_2$ and $LiMn_2O_4$ have advantages of excellent thermal safety and low costs, but also have problems of small capacity and poor high-temperature characteristics. In addition, while a $LiNiO_2$-based positive electrode active material exhibits a battery characteristic such as a high discharge capacity, due to cation mixing between Li and a transition metal, it is difficult to synthesize the $LiNiO_2$-based positive electrode active material, thereby causing a big problem in rate characteristics.

In addition, depending on the intensification of such cation mixing, a large amount of Li by-products is generated. Since most of the Li by-products consist of LiOH and $Li_2CO_3$, they may cause gelation in preparation of a positive electrode paste or cause gas generation according to repeated charge/discharge after the manufacture of an electrode. Among the Li by-products, residual $Li_2CO_3$ increases the cell swelling phenomenon and thus acts a cause of reducing lifetime characteristics.

To compensate for these shortcomings, as a positive electrode active material for a secondary battery, the demand for a high-Ni positive electrode active material having an Ni content of 50% or more has started to increase. However, such a high-Ni positive electrode active material exhibits high capacity, and as the Ni content in the positive electrode active material increases, there is a problem of causing structural instability due to Li/Ni cation mixing. The structural instability of the positive electrode active material may lead to rapid deterioration of a lithium secondary battery not only at high temperatures but also at room temperature.

Accordingly, it is necessary to develop a positive electrode active material to compensate for the problems of such high-Ni positive electrodes.

SUMMARY OF THE INVENTION

In the lithium secondary battery market, the growth of lithium secondary batteries for electric vehicles plays a leading role, and the demand for positive electrode active materials used in lithium secondary batteries is also constantly changing.

For example, conventionally, a lithium secondary battery using LFP has been mainly used from the viewpoint of ensuring safety, but recently, the use of a nickel-based lithium composite oxide, which has a higher energy capacity per weight compared to LFP, is expanding.

Accordingly, the present invention is directed to providing a high-Ni positive electrode active material capable of improving the electrochemical properties and stability of a lithium secondary battery.

The present invention is also directed to providing a lithium secondary battery employing a positive electrode including the positive electrode active material defined above.

Conventionally, a technique for reducing the surface side reactions of a positive electrode active material and thus improving stability as an element such as a light element (typically, an element such as boron) in the positive electrode active material is allowed to be present in the form of an oxide has been suggested.

However, by forming the light element-containing oxide on the surface of the positive electrode active material, side reactions between the positive electrode active material and an electrolyte may be reduced, but conversely, there is a problem in that the content of lithium-containing impurities on the surface of the positive electrode active material is increased due to the reaction between the positive electrode active material and the light element-containing raw material.

This problem is that at least some of the lithium-containing impurities present on the surface of the positive electrode active material react with the light element-containing raw material, thereby being converted into a light element-containing oxide, but the amount of the lithium-containing impurities converted into the light element-containing oxide is ultimately smaller than the content of the lithium-containing impurities generated by the reaction between the positive electrode active material and the light element-containing raw material.

Therefore, one aspect of the present invention provides a positive electrode active material which is improved in electrochemical properties and stability by removing excess light element-containing oxide and lithium-containing impurities from the positive electrode active material after the light element-containing oxide is formed on at least a part of the surface(s) of primary particles and/or secondary particles through the thermal treatment of a mixture of a precursor of the lithium composite oxide included in the positive electrode active material and a light element-containing raw material.

In one embodiment, the primary particle may be represented by Formula 1 below.

$$[\text{Formula 1}] \quad Li_wNi_{1-(x+y+z+z')}Co_xB_yM1_zM2_{z'}O_2$$

(Here, M1 is at least one selected from Mn and Al, M2 is at least one selected from Mn, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd and Cu, M1 and M2 are different elements, $0.5 \leq w \leq 1.5$, $0 \leq x \leq 0.50$, $0 < y \leq 0.20$, $0 \leq z \leq 0.20$, and $0 \leq z' \leq 0.20$)

Meanwhile, the amount of LiOH elution measured by neutralization titration using HCl for the positive electrode active material may satisfy Equation 1 below.

$$[\text{Equation 1}]$$
$$r < (19{,}153 \times x1) + x2$$

(Here, x1 is the content (mol%) of boron in the lithium composite oxide before washing, x2 is the amount (ppm) of LiOH converted from the HCl consumption corresponding to the x-axis value of a first peak appearing at the smallest x-axis value in the differential graph shown by differentiating the pH value with respect to the amount of HCl input by the neutralization titration for the lithium composite oxide before washing, and r is the elution amount (ppm) of LiOH for the lithium composite oxide after washing).

In addition, the amount of LiOH elution measured by neutralization titration using HCl for the positive electrode active material satisfies Equation 2 below.

$$[\text{Equation 2}]$$
$$y1 \leq r \leq y1 + (y2 \times (1 - y3) \times 18{,}429)$$

(Here, y1 is the amount (ppm) of LiOH converted from the HCl consumption corresponding to the x-axis value of a first peak appearing at the smallest x-axis value in the differential graph shown by differentiating the pH value with respect to the amount of HCl input by the neutralization titration for the lithium composite oxide after washing, y2 is the content (mol%) of boron in the lithium composite oxide before washing, y3 is the change rate of the content of boron in the lithium composite oxide before and after washing, and has a value greater than 0 and less than or equal to 0.90, and r is the elution amount (ppm) of LiOH for the lithium composite oxide after washing).

Another aspect of the present invention provides a positive electrode including the above-described positive electrode active material.

Still another aspect of the present invention provides a lithium secondary battery including the above-described positive electrode.

According to the present invention, after a light element-containing oxide is formed on at least a part of the surface(s) of primary particles and/or secondary particles through the thermal treatment of a mixture of a precursor of a positive electrode active material and a light element-containing raw material, excess light element-containing oxide and lithium-containing impurities are removed from the positive electrode active material, and thus electrochemical properties and stability can be improved.

Particularly, in the positive electrode active material according to the present invention, by thermal treatment of the mixture of the precursor of positive electrode active material and the light element-containing raw material in the sintering process of the positive electrode active material, the light element-containing oxide in the positive electrode active material can be intensively present on the surface and/or interface of the primary particles, and at the same time, the positive electrode active material can be doped with the light element.

In addition, by controlling the content of light element-containing oxide present on the surface of the secondary particles, degradation in electrochemical properties of the positive electrode active material can be prevented by the light element-containing oxide and/or the lithium-containing impurities.

BRIEF DESCRIPTION OF THE DRAWINGS

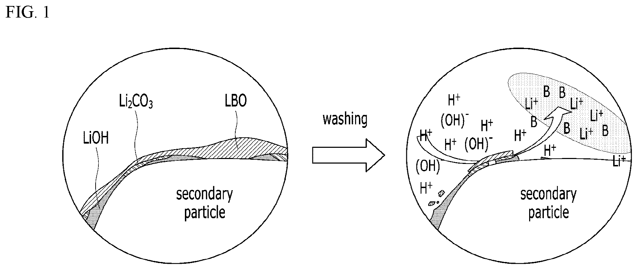

FIG. 1 is a schematic diagram of a positive electrode active material according to one embodiment of the present invention, schematically illustrating the procedure of removing a coating layer containing a boron-containing oxide and lithium-containing impurities from the surface of secondary particles.

FIG. 2 is a differentiation graph obtained through neutralization titration before washing of a lithium composite oxide constituting a positive electrode active material according to Example 1, Example 2 or Comparative Example 1.

DETAILED DESCRIPTION OF EXEMPLARY EMBODIMENTS

Hereinafter, a positive electrode active material for a lithium secondary battery, which has improved electrochemical properties and stability, and a lithium secondary battery including the same will be described in further detail.

Positive electrode active material

According to one embodiment of the present invention, a positive electrode active material including a secondary particle in which a plurality of primary particles, which are a lithium composite oxide enabling intercalation and deintercalation of lithium, are aggregated is provided.

Here, the primary particle refers to one grain (or crystallite), and the secondary particle refers to an aggregate formed by aggregating a plurality of primary particles. The primary particle may be formed in a rod, oval, and/or indeterminate shape(s). There may be a void and/or a grain boundary between the primary particles constituting the secondary particle.

For example, the primary particle may be spaced apart from a neighboring primary particle in the secondary particle to form an internal void. In addition, the primary particle may be in contact with an internal void to form a surface present in the secondary particle without forming a grain boundary by being in contact with a neighboring primary particle. Meanwhile, a surface where the primary particle present at the outermost surface of the secondary particle is exposed to external air forms the surface of the secondary particle.

Here, as the average major axis length of the primary particle may be 0.1 to 5 $\mu$m, and preferably, 1.0 to 2 $\mu$m, the optimal density of a positive electrode manufactured using positive electrode active materials according to various embodiments of the present invention may be realized. In addition, the average particle diameter of the secondary particle may vary according to the number of aggregated primary particles, and may be 1 to 30 $\mu$m.

Meanwhile, the positive electrode active material may have a bimodal form including small secondary particles with an average particle diameter of 5 $\mu$m or less, and large secondary particles with an average particle diameter of 12 $\mu$m or more.

In one embodiment, the primary particles may be a lithium composite oxide containing at least Li, Ni and B. More specifically, the primary particle may be represented by Formula 1 below.

[Formula 1] $\quad Li_wNi_{1-(x+y+z+z')}Co_xB_yM1_zM2_{z'}O_2$

(Here, M1 is at least one selected from Mn and Al, M2 is at least one selected from Mn, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd and Cu, M1 and M2 are different elements, $0.5 \leq w \leq 1.5$, $0 \leq x \leq 0.50$, $0 < y \leq 0.20$, $0 \leq z \leq 0.20$, and $0 \leq z' \leq 0.20$).

When the positive electrode active material has a bimodal form including small particles and large particles, the concentration of M1 in the small particles may be higher than that in the large particles.

Generally, the content of a light element present in the positive electrode active material, typically, boron, may only be estimated with the content of a boron-containing raw material added in the preparation of the positive electrode active material, but there is a problem in that it is difficult to specifically confirm how the light element is present in the positive electrode active material compared to other elements.

However, according to the present invention, in the sintering process of the precursor of lithium composite oxide (hydroxide precursor or calcined precursor), by thermal treatment of a mixture of the precursor and the light element-containing raw material, as represented by Formula 1, the light element in the primary particle may be doped and also a coating layer containing the light element-containing oxide in the positive electrode active material may be intensively present on the surface and/or interface of the primary particles.

In addition, when thermal treatment is performed after mixing the precursor and the light element-containing raw material in the sintering process of the precursor of lithium composite oxide (hydroxide precursor or calcined precursor), a coating layer containing the light element-containing oxide may be formed on at least a part of the surface of the secondary particle.

As described above, the coating layer may contain at least one boron-containing oxide represented by Formula 2 below.

$$[Formula\ 2] \qquad Li_aB_bO_c$$

(Here,

$0 \leq a \leq 8$, $0 < b \leq 8$, and $2 \leq c \leq 13$)

That is, the boron-containing oxide is a borate-based compound or a lithium borate (LBO)-based compound, and non-limiting examples of the borate-based compound or LBO-based compound include $B_2O_3$, $Li_2O$-$B_2O_3$, $Li_3BO_3$, $Li_2B_4O_7$, $Li_2B_2O_7$, and $Li_2B_8O_{13}$.

The coating layer may be present on at least a part of the surface of the primary particle and/or the secondary particle, and the coating layer may be defined by a region in which the boron-containing oxide represented by Formula 2 is present.

The coating layer may continuously or discontinuously coat at least a part of the surface of the primary particle and/or the secondary particle, and when the coating layer is discontinuously present, it may be present in the form of an island. In addition, the coating layer may be present in the form of a solid solution that does not form a boundary with the primary particles and/or the secondary particles, but the present invention is not limited thereto.

The coating layer is not formed by sintering the precursor of lithium composite oxide (hydroxide precursor or calcined precursor) and a boron-containing raw material and mixing and thermally treating the sintering resultant, but by mixing and thermally treating the precursor of lithium composite oxide (hydroxide precursor or calcined precursor) and a boron-containing raw material.

Meanwhile, through washing after the thermal treatment of a mixture of the precursor of lithium composite oxide (hydroxide precursor or calcined precursor) and a boron-containing raw material, at least a part of the coating layer present on at least a part of the surface of the primary particle and/or the secondary particle may be removed.

Particularly, by washing the lithium composite oxide on which the coating layer containing a boron-containing oxide is formed, the coating layer present on the surface and/or interface of the primary particle present in a region relatively close to the surface of the secondary particle may be further removed, compared to the coating layer present on the surface and/or interface of the primary particle present in a region relatively close to the center of the secondary particle.

In addition, by washing the lithium composite oxide on which the coating layer containing a boron-containing oxide is formed, the coating layer present on the surface of the secondary particle may be further removed, relative to the coating layer present on the surface and/or interface of the primary particle present in the region relatively close to the center of the secondary particle.

Due to the above-described washing, a part of the positive electrode active material, particularly, a light element-containing oxide on the surface of the secondary particle, may be removed to expose the surface of the secondary particle, and lithium-containing impurities present on the surface of the secondary particle may also be removed.

Accordingly, relative to the content of boron in the positive electrode active material before washing, the content of boron in the positive electrode active material after washing may be reduced, and a change rate (reduction rate) of the content of boron in the positive electrode active material after washing may be greater than 0 and less than or equal to 0.90 (more than 0% and less than or equal to 95%), preferably, 0.10 to 0.90 (10% to 95%), and more preferably, 0.20 to 0.90 (20% to 90%).

As a result of washing the positive electrode active material, the content of residual boron in the lithium composite oxide is preferably at least 0.3 mol% or less. However, when the content of residual boron in the lithium composite oxide is 0.3 mol% or less, and the content of boron in the lithium composite oxide before washing is 0.3 mol% or less, since the distribution of the boron-containing oxide and the lithium-containing impurities present on the surface(s) of primary particles and/or secondary particles constituting the lithium composite oxide and the form of the coating layer containing the boron-containing oxide are different, they should be distinguished from each other.

When the reduction rate of the content of boron in the positive electrode active material by washing of the positive electrode active material is more than 95%, as the content of the boron-containing oxide on the positive electrode active material, particularly, on the surface of the secondary particle, is excessively reduced, it may be difficult to realize the effect of inhibiting the side reactions caused by the boron-containing oxide.

On the other hand, when the boron-containing oxide is formed on the surface of the lithium composite oxide and then is not washed, or the content of boron in the positive electrode active material is hardly reduced after washing the positive electrode active material, as boron-containing oxide is excessively present on the surface of the secondary particles, or lithium-containing impurities are excessively present on the surface of the secondary particles, rather, there is a risk that the electrochemical properties of the positive electrode active material deteriorate.

In one embodiment, the amount of LiOH elution measured by neutralization titration using HCl for the positive electrode active material may satisfy Equation 1 below.

$$[\text{Equation 1}]$$
$$r < (19,153 \times x1) + x2$$

(Here,

x1 is the content (mol%) of boron in the lithium composite oxide before washing,
x2 is the amount (ppm) of LiOH converted from the HCl consumption corresponding to the x-axis value of a first peak appearing at the smallest x-axis value in the differential graph shown by differentiating the pH value with respect to the amount of HCl input by the neutralization titration for the lithium composite oxide before washing, and
r is the elution amount (ppm) of LiOH for the lithium composite oxide after washing).

Here, the neutralization titration may be performed using 0.1N HCl with respect to 5 g of the positive electrode active material, and the amount of LiOH elution may be measured from the differential graph of the change in pH according to the amount of HCl input obtained through the neutralization titration.

In Equation 1, the constant "19,153" is used to calculate the increase in LiOH according to the boron content in the lithium composite oxide before washing.

As described above, as the mixing ratio of the light element-containing raw material reacting with the precursor of the lithium composite oxide increases, the boron content in the lithium composite oxide and the content of the boron-containing oxide in the lithium composite oxide increase. As the content of the boron-containing oxide present in the lithium composite oxide increases, the amount of LiOH elution according to the following Scheme 1 during neutralization titration may increase.

[Scheme 1]       $Li_3BO_3 + H_2O \rightarrow LiOH + H_3BO_3$

Meanwhile, x2 is the amount (ppm) of LiOH converted from the HCl consumption corresponding to the x-axis value of a first peak appearing at the smallest x-axis value in the differential graph shown by differentiating the pH value with respect to the amount of HCl input by the neutralization titration for the lithium composite oxide before washing, and the amount of HCl consumption corresponding to the x axis value of a first peak appearing at the smallest x axis value is determined by the amount of LiOH present in the lithium composite oxide before washing, not LiOH converted from $Li_3BO_3$ according to Scheme 1.

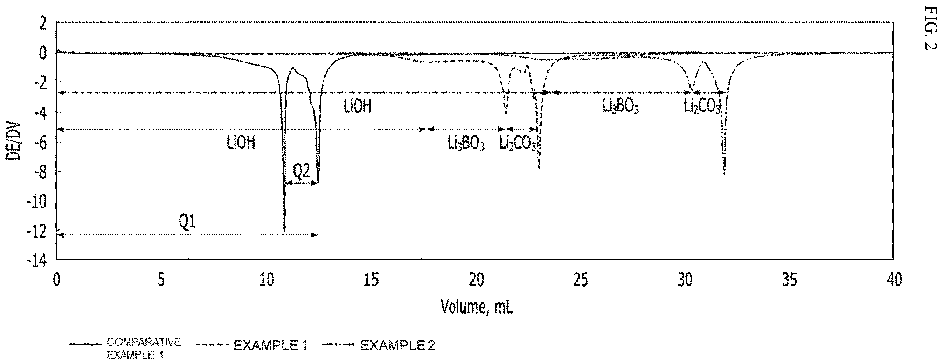

For example, referring to the differential graph corresponding to Example 1 of FIG. 2, the amount of HCl consumption corresponding to the x axis value of a first peak appearing at the smallest x axis value may be converted into the amount of LiOH present in the lithium composite oxide, and the amount of HCl consumption corresponding to the difference between the x axis value of the first peak appearing at the smallest x axis value and the x axis value of a second peak appearing next may be converted into the amount of LiOH converted from $Li_3BO_3$ according to Scheme 1. In addition, the amount of HCl consumption corresponding to the difference between the x axis value of the second peak and the x axis value of a third peak that appears next may be converted into the amount of $Li_2CO_3$ in the lithium-containing impurities.

Therefore, when the boron content (mol%) in the lithium composite oxide before washing is 1.0 mol%, and the amount (ppm) of LiOH converted from the amount of HCl consumption corresponding to the x axis value of the first peak appearing at the smallest x axis value in the differential graph obtained by differentiating a pH value with respect to the amount of HCl input by the neutralization titration for the lithium composite oxide before washing is 8,638 ppm, the amount of LiOH calculated from the right side of Equation 1 may be 27,791 ppm.

In this case, it is preferable that the amount of LiOH elution measured by neutralization titration using HCl for the positive electrode active material containing the washed lithium composite oxide is smaller than 27,791 ppm.

When the boron content (mol%) in the lithium composite oxide before washing is 1.0 mol%, and the amount (ppm) of LiOH converted from the amount of HCl consumption corresponding to the x axis value of the first peak appearing at the smallest x axis value in the differential graph obtained by differentiating a pH value with respect to the amount of HCl input by the neutralization titration for the lithium composite oxide before washing is 8,638 ppm, if the amount of LiOH elution measured by neutralization titration using HCl for the positive electrode active material containing the washed lithium composite oxide is 27,791 ppm or more, as the boron-containing oxide and/or the lithium-containing impurities are excessively present on the surface of the secondary particles, rather, there is a risk that the electrochemical properties of the positive electrode active material deteriorate.

More specifically, the amount of LiOH elution measured by neutralization titration using HCl for the positive electrode active material may satisfy Equation 2 below.

[Equation 2]

$$y1 \leq r \leq y1 + (y2 \times (1 - y3) \times 18{,}429)$$

(Here,

y1 is the amount (ppm) of LiOH converted from the HCl consumption corresponding to the x-axis value of a first peak appearing at the smallest x-axis value in the differential graph shown by differentiating the pH value with respect to the HCl input by the neutralization titration for the lithium composite oxide after washing,

y2 is the content (mol%) of boron in the lithium composite oxide before washing,

y3 is the change rate of the content of boron in the lithium composite oxide before and after washing, and has a value greater than 0 and less than or equal to 0.90, and

r is the elution amount (ppm) of LiOH for the lithium composite oxide after washing).

In Equation 2, the constant "18,429" is used to calculate the increase in LiOH according to the boron content in the lithium composite oxide after washing.

y1 corresponds to x2 of Equation 1 and is the amount (ppm) of LiOH converted from the HCl consumption corresponding to the x-axis value of a first peak appearing at the smallest x-axis value in the differential graph shown by differentiating the pH value with respect to the HCl input by the neutralization titration for the lithium composite oxide after washing, and the amount of HCl consumption corresponding to the x axis value of a first peak appearing at the smallest x axis value is determined by the amount of LiOH present in the lithium composite oxide after washing, not LiOH converted from $Li_3BO_3$ according to Scheme 1.

Therefore, when the change rate of the boron content (mol%) in the lithium composite oxide after washing is 0.88 (88%), and the amount (ppm) of LiOH converted from the amount of HCl consumption corresponding to the x axis value of the first peak appearing at the smallest x axis value in the differential graph obtained by differentiating a pH value with respect to the amount of HCl input by the neutralization titration for the lithium composite oxide after washing is 2,734 ppm, the amount of LiOH calculated from Equation 2 may be 2,734 ppm or more and 4,945 ppm or less.

In this case, the amount of LiOH elution measured by neutralization titration using HCl for the positive electrode active material containing the washed lithium composite oxide may be 2,734 ppm or more and 4,945 ppm or less, and preferably more than 2,734 ppm and 4,945 ppm or less.

When the boron content (mol%) in the lithium composite oxide before washing is 1.0 mol%, the change rate of the boron content in the lithium composite oxide after washing is 0.88 (88%), and the amount (ppm) of LiOH converted from the amount of HCl consumption corresponding to the x axis value of the first peak appearing at the smallest x axis value in the differential graph obtained by differentiating a pH value with respect to the amount of HCl input by the neutralization titration for the lithium composite oxide after washing is 2,734 ppm, if the washing process for the positive electrode active material is excessively performed, the amount of LiOH elution measured by neutralization titration using HCl for the positive electrode active material containing the washed lithium composite oxide may be less than 2,734 ppm.

In this case, although the content of the lithium-containing impurities present on the surface of the lithium composite oxide may be reduced, rather, there is a risk of damaging the surface of the lithium composite oxide and lowering electrochemical properties and stability. In addition, as the boron-containing oxide is almost removed from the surface of the lithium composite oxide, it may be difficult to realize the effect of inhibiting side reactions on the surface.

On the other hand, when the amount of LiOH elution measured by neutralization titration using HCl for the positive electrode active material containing the washed lithium composite oxide is more than 4,945 ppm under the same conditions, due to excess boron-containing oxide and/or the lithium-containing impurities remaining on the surface of the secondary particle, there is a risk of lowering the electrochemical properties of the positive electrode active material.

In another embodiment, the coating layer may further include at least one metal oxide represented by Formula 3 below.

[Formula 3] $Li_dM3_eO_f$

(Here,

M3 is at least one selected from Ni, Mn, Co, Fe, Cu, Nb, Mo, Ti, Al, Cr, Zr, Zn, Na, K, Ca, Mg, Pt, Au, P, Eu, Sm, W, Ce, V, Ba, Ta, Sn, Hf, Ce, Gd and Nd,
$0 \leq d \leq 8$, $0 < e \leq 8$, and $2 \leq f \leq 13$)

The metal oxide may reduce lithium-containing impurities present on the surface of the lithium composite oxide and serve as a diffusion path for lithium ions, thereby improving the electrochemical properties of the positive electrode active material.

The metal oxide may be formed before thermal treatment of a mixture of the lithium composite oxide precursor (hydroxide precursor or calcined precursor) and a B-containing raw material, by additionally mixing an M3-containing raw material and performing thermal treatment. In addition, in a different case, the metal oxide may be formed through thermal treatment after mixing with lithium composite oxide before or after washing the lithium composite oxide in which a boron-containing oxide is formed on the surface of the metal oxide.

The metal oxide may be present on at least a part of the surface of the primary particle and/or secondary particle of the lithium composite oxide, and the metal oxide and the boron-containing oxide may be present in the same layer or different layers.

The metal oxide is an oxide in which lithium and an element represented by M3 are complexed, or an M3 oxide, and the metal oxide may be, for example, $Li_aW_bO_c$, $Li_aZr_bO_c$, $Li_aTi_bO_c$, $Li_aNi_bO_c$, $Li_aCo_bO_c$, $Li_aAl_bO_c$, $Co_bO_c$, $Al_bO_c$, $W_bO_c$, $Zr_bO_c$ or $Ti_bO_c$, but the above examples are merely described for convenience of understanding, and the oxide defined in the present invention is not limited to the above-described examples.

In addition, the metal oxide may be or further include an oxide in which lithium and at least two elements represented by M3 are complexed. The oxide in which lithium and at least two elements represented by M3 are complexed may be, for example, $Li_a(W/Ti)_bO_c$, $Li_a(W/Zr)_bO_c$, $Li_a(W/Ti/Zr)_bO_c$, or $Li_a(W/Ti/B)_bO_c$, but the present invention is not necessarily limited thereto.

The positive electrode active material according to the present invention consists of a lithium composite oxide including primary particles containing at least Li, Ni and B and secondary particles in which the primary particles are aggregated, and while a coating layer containing a boron-containing oxide is present on at least a part of the surface of the secondary particles, at least a part of the coating layer is removed from the surface of the secondary particles.

The coating layer may be formed by thermal treatment of a mixture of a precursor of the lithium composite oxide and a boron-containing raw material, and at least a part of the coating layer may be removed from the surface of the secondary particle through washing of the lithium composite oxide.

Here, for the lithium composite oxide, a ratio of the porosity in the secondary particle after washing/the porosity in the secondary particle before washing may be 1.7 or more.

That is, as a result of washing the lithium composite oxide, a part of the boron-containing oxide on the surface of the secondary particle may be removed, and a part of the boron-containing oxide present in the secondary particles may also be removed. The boron-containing oxide present in the secondary particles may be present as a coating layer on the surface of the primary particles.

The porosity in the secondary particles may increase by removing a part of the boron-containing oxide present in the secondary particles through washing the lithium composite oxide.

Here, for the lithium composite oxide, when the ratio of the porosity in the secondary particles after washing/the porosity in the secondary particles before washing is less than 1.7, there is a risk of lowering the electrochemical properties of the positive electrode active material as excess boron-containing oxide and/or lithium-containing impurities remain in the secondary particles.

Meanwhile, for the lithium composite oxide, when the ratio of the porosity in the secondary particles after washing/the porosity in the secondary particles before washing is more than 2.0, rather, there is a risk of damaging the surface and inside of the lithium composite oxide and lowering electrochemical properties and stability. In addition, as the boron-containing oxide in the lithium composite oxide is almost removed, it may be difficult to realize the effect of inhibiting side reactions at the interface between the primary particles present in the secondary particle.

Lithium secondary battery

According to another embodiment of the present invention, a positive electrode including a positive electrode current collector and a positive electrode active material layer formed on the positive electrode current collector may be provided. Here, the positive electrode active material may include lithium composite oxides according to various embodiments of the present invention as a positive electrode active material.

Therefore, detailed description of the lithium composite oxides will be omitted, and other components that have not been described will be explained. In addition, hereinafter, the above-described lithium composite oxide will be referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 $\mu$m, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and a binder included optionally as needed.

Here, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve attachment between particles of the positive electrode active material and the adhesive strength between the positive electrode active material and a current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methyl pyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to prepare a positive electrode.

In addition, in another exemplary embodiment, the positive electrode may be prepared by casting the positive electrode slurry composition on a separate support, and laminating a film obtained by delamination from the support on the positive electrode current collector.

Still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and an electrolyte, which are interposed between the positive electrode and the negative electrode. Here, since the positive electrode is the same as described above, for convenience, detailed description for the positive electrode will be omitted, and other components which have not been described below will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 $\mu$m, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and a binder optionally included as needed.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as $SiO_\beta$ ($0<\beta<2$), $SnO_2$, vanadium oxide, or lithium vanadium oxide; or a composite including the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding bonding between a conductive material, an active material and a current collector, and may be generally added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber, nitrile-butadiene rubber, fluorine rubber, and various copolymers thereof.

The conductive material is a component for further improving conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

In addition, in another exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, a separator is not particularly limited as long as it is generally used in a lithium secondary battery to separate a negative electrode from a positive electrode and provide a diffusion path for lithium ions, and particularly, the separator has a low resistance to ion mobility of an electrolyte and an excellent electrolyte solution impregnation ability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in the manufacture of a lithium secondary battery, but the present invention is not limited thereto.

Specifically, the electrolyte may include an organic solvent and a lithium salt.

The organic solvent is not particularly limited as long as it can serve as a medium enabling the transfer of ions involved in an electrochemical reaction of a battery. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charge/discharge performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt is preferably in the range of 0.1 to 2.0M. When the concentration of the lithium salt is included in the above-mentioned range, the electrolyte has suitable conductivity and viscosity and thus can exhibit excellent electrolytic performance. Therefore, lithium ions can effectively migrate.

To enhance lifetime characteristics of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits excellent discharge capacity, excellent output characteristics and excellent lifespan characteristics, it is useful in portable devices such as a mobile phone, a notebook computer and a digital camera and an electric automobile field such as a hybrid electric vehicle (HEV).

The outer shape of the lithium secondary battery according to the present invention is not particularly limited, but may be a cylindrical, prismatic, pouch or coin type using a can. In addition, the lithium secondary battery may be used in a battery cell that is not only used as a power source of a small device, but also preferably used as a unit battery for a medium-to-large battery module including a plurality of battery cells.

According to yet another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Preparation Example 1. Preparation of positive electrode active material

Example 1

A spherical $Ni_{0.80}Co_{0.12}Mn_{0.08}(OH)_2$ hydroxide precursor was synthesized by a coprecipitation method. Specifically, in a 90 L reactor, 25 wt% NaOH and 30 wt% $NH_4OH$ were added to a 1.5 M composite transition metal sulfuric acid aqueous solution in which nickel sulfate, cobalt sulfate and manganese sulfate were mixed in a molar ratio of 80:12:8. The pH in the reactor was maintained at 11.5, and the reactor temperature at this time was maintained at 60 °C, and an inert gas $N_2$ was introduced into the reactor to prevent oxidation of the prepared precursor. After the completion of synthesis and stirring, filtration was performed using filter press (F/P) equipment to obtain a $Ni_{0.80}Co_{0.12}Mn_{0.08}(OH)_2$ hydroxide precursor (nickel composite precursor).

Subsequently, after mixing the nickel composite precursor with LiOH (Li/(Ni+Co+Mn) mol ratio = 1.01) as a lithium compound and 1.0 mol% $H_3BO_3$ with respect to the nickel composite precursor, thermal treatment was performed for 12 hours while maintaining an $O_2$ atmosphere and increasing the temperature up to 700 °C at 2 °C per minute in a sintering furnace, and the resultant was disintegrated, thereby obtaining a lithium composite oxide.

Afterward, the lithium composite oxide was washed with distilled water, and the washed lithium composite oxide was filtered and dried.

Specifically, washing of the lithium composite oxide was performed as follows.

- First washing

First, the lithium composite oxide and distilled water were mixed in a weight ratio of 1:1 and then stirred at 25 °C for 30 minutes, thereby preparing a mixture. Subsequently, the mixture was added to the composite transition metal sulfuric acid aqueous solution used in synthesis of a precursor and stirred for 30 minutes while adding NaOH and $NH_4OH$.

- Second washing and filtration

After the first washing, the lithium composite oxide was washed using the same weight of distilled water as the total weight of the lithium composite oxide, filtered using F/P equipment and dried, thereby finally obtaining a positive electrode active material.

Example 2

A positive electrode active material was prepared in the same manner as described in Example 1, except that $H_3BO_3$ was mixed to be 0.5 mol% relative to the nickel composite precursor.

Example 3

A positive electrode active material was prepared in the same manner as described in Example 1, except that $H_3BO_3$ was mixed to be 2.0 mol% relative to the nickel composite precursor.

Example 4

A positive electrode active material was prepared in the same manner as described in Example 1, except that, during the second washing, the lithium composite oxide was washed with distilled water twice the total weight of the lithium composite oxide.

Example 5

A positive electrode active material was prepared in the same manner as described in Example 1, except that, during the second washing, the lithium composite oxide was washed with distilled water 0.5-fold the total weight of the lithium composite oxide.

Example 6

A positive electrode active material was prepared in the same manner as described in Example 1, except that, after washing, the dried lithium composite oxide was mixed with 0.15 mol% $Al_2O_3$ and 0.3 mol% $TiO_2$ relative to the lithium composite oxide and further thermally treated for 8 hours while maintaining an $O_2$ atmosphere and increasing

the temperature up to 680 °C at 2 °C per minute in the sintering furnace.

Comparative Example 1

A positive electrode active material was prepared in the same manner as described in Example 1, except that the lithium composite oxide obtained as a result of thermal treatment of a mixture of the nickel composite precursor in which $H_3BO_3$ was not mixed and the lithium compound was not washed.

Comparative Example 2

A positive electrode active material was prepared in the same manner as described in Example 1, except that $H_3BO_3$ was not mixed before thermal treatment of the nickel composite precursor.

Comparative Example 3

A positive electrode active material was prepared in the same manner as described in Example 1, except that the lithium composite oxide obtained as a result of thermal treatment of a mixture of the nickel composite precursor, the lithium compound and $H_3BO_3$ was not washed.

Comparative Example 4

A positive electrode active material was prepared in the same manner as described in Example 1, except that, during second washing, the lithium composite oxide was washed using distilled water three times the total weight of the lithium composite oxide.

Comparative Example 5

A positive electrode active material was prepared in the same manner as described in Example 1, except that, during second washing, the lithium composite oxide was washed using distilled water 0.2-fold the total weight of the lithium composite oxide.

Preparation Example 2, Manufacture of lithium secondary battery

A positive electrode slurry was prepared by dispersing 92 wt% of each of the positive electrode active materials prepared according to Preparation Example 1, 4 wt% of artificial graphite and 4 wt% of a PVDF binder in 30 g of N-methyl-2-pyrrolidone (NMP). The positive electrode slurry was applied to an aluminum thin film having a thickness of 15 μm and vacuum-dried at 135 °C, thereby manufacturing a positive electrode for a lithium secondary battery.

A coin battery was manufactured using a lithium foil as a counter electrode for the positive electrode, a porous polyethylene film (Celgard 2300, thickness: 25 μm) as a separator, and an electrolyte solution in which $LiPF_6$ was present at a concentration of 1.15M in a solvent in which ethylene carbonate and ethyl methyl carbonate are mixed in a volume ratio of 3:7.

Experimental Example 1. Analysis of components of positive electrode active material

(1) Measurement of boron content in lithium composite oxide before/after washing

To measure the boron (B) content in the lithium composite oxide before/after washing, ICP analysis was performed on the positive electrode active material.

Specifically, after weighing 0.05g each of the positive electrode active material before/after washing prepared according to Preparation Example 1, a mixed solvent of 2 mL nitric acid, 6 mL hydrochloric acid and 20 mL of deionized water was added to prepare a mixture, and then a positive electrode active material was completely dissolved in the mixture. Subsequently, deionized water was added to the mixture to dilute the same to a total of 100 mL, and then the boron (B) content in the lithium composite oxide included in the positive electrode active material was measured using ICP-OES (Perkin Elmer, Avio 500).

The result of measuring the boron (B) content in the lithium composite oxide before/after washing is shown in Table 1 below. In Table 1, change rates before/after washing indicate the change rates of the boron (B) content in the lithium composite oxide after washing with respect to the boron (B) content in the lithium composite oxide before washing, and values in parentheses are expressed as %.

[Table 1]

| Classification | Before washing (mol%) | After washing (mol%) | Change rate before/after washing |
|---|---|---|---|
| Example 1 | 0.99 | 0.21 | 0.788 (78.8) |
| Example 2 | 0.48 | 0.12 | 0.75 (75.0) |
| Example 3 | 1.98 | 0.49 | 0.753 (75.3) |
| Example 4 | 0.99 | 0.09 | 0.909 (90.9) |
| Example 5 | 0.99 | 0.32 | 0.677 (67.7) |
| Example 6 | 0.99 | 0.20 | 0.808 (80.8) |
| Comparative Example 1 | n.d | n.d | n.d |
| Comparative Example 2 | n.d | n.d | n.d |
| Comparative Example 3 | 0.99 | 0.99 | 0(0) |
| Comparative Example 4 | 0.99 | 0 | 1 (100) |
| Comparative Example 5 | 0.99 | 0.38 | 0.62 (62.0) |
| *n.d : not detected | | | |

(2) Measurement of content of lithium-containing impurities (LiOH) in lithium composite oxide before/after washing

To measure the content of lithium-containing impurities (LiOH) in the lithium composite oxide before/after washing, pH titration analysis was performed.

Specifically, 5 g each of the lithium composite oxide before/after washing prepared according to Preparation Example 1 was added to 100 ml of DIW, followed by stirring (300 rpm) for 10 minutes and filtration. Subsequently, while adding 0.1N HCl to 50 ml of the filtered solution, the amount of HCl consumption according to the pH change in the solution was measured (pH meter, using Ag/AgCl metal wire), and a differential graph was obtained by differentiating the pH value with respect to the amount of HCl input.

The measurement results of lithium impurity content (LiOH) in the lithium composite oxide before/after washing are shown in Table 2 below. For reference, in Comparative Example 1 and Comparative Example 3, since the lithium composite oxide was not washed, only the lithium impurity content (LiOH) in the lithium composite oxide before washing was listed.

[Table 2]

| Classification | Before washing (ppm) | After washing (ppm) |
|---|---|---|
| Example 1 | 27,790 | 6,527 |
| Example 2 | 18,214 | 4,877 |
| Example 3 | 46,942 | 11,661 |
| Example 4 | 27,720 | 4,327 |
| Example 5 | 27,740 | 8,544 |
| Example 6 | 27,790 | 6,380 |
| Comparative Example 1 | 8,638 | n.c |
| Comparative Example 2 | 8,642 | 2,676 |
| Comparative Example 3 | 27,782 | n.c |
| Comparative Example 4 | 27,776 | 1,020 |
| Comparative Example 5 | 27,749 | 9,644 |
| *n.c : not changed | | |

In addition, from the results of Tables 1 and 2, it was confirmed whether the lithium composite oxide before and after washing satisfies Equations 1 and 2, and the results are shown in Table 3 below.

[Equation 1]

$$r < (19,153 \times x1) + x2$$

(Here, x1 is a boron content (mol%) in the lithium composite oxide before washing, x2 is the amount (ppm) of LiOH converted from the HCl consumption corresponding to the x-axis value of a first peak appearing at the smallest x-axis value in the differential graph shown by differentiating the pH value with respect to the amount of HCl input by the neutralization titration for the lithium composite oxide before washing, and r is the elution amount (ppm) of LiOH for the lithium composite oxide after washing).

[Equation 2]

$$y1 \le r \le y1 + (y2 \times (1 - y3) \times 18,429)$$

(Here, y1 is the amount (ppm) of LiOH converted from the HCl consumption corresponding to the x-axis value of a first peak appearing at the smallest x-axis value in the differential graph shown by differentiating the pH value with respect to the amount of HCl input by the neutralization titration for the lithium composite oxide after washing, y2 is the content (mol%) of boron in the lithium composite oxide before washing, y3 is the change rate of the content of boron in the lithium composite oxide before and after washing, and has a value greater than 0 and less than or equal to 0.90, and r is the elution amount (ppm) of LiOH for the lithium composite oxide after washing).

[Table 3]

| Classification | LiOH content (ppm) before washing | LiOH content (ppm) after washing | (19,153×x1) + x2 | y1 | y1 + (y2 × (1 - y3) × 18,429) |
|---|---|---|---|---|---|
| Example 1 | 27,790 | 6,527 | 27,598 | 2,734 | 17,147 |
| Example 2 | 18,214 | 4,877 | 17,831 | 2,734 | 10,518 |
| Example 3 | 46,942 | 11,661 | 46,559 | 2,734 | 21,344 |
| Example 4 | 27,720 | 4,327 | 27,598 | 2,734 | 19,337 |
| Example 5 | 27,740 | 8,544 | 27,598 | 2,734 | 15,140 |
| Example 6 | 27,790 | 6,380 | 27,598 | 2,734 | 17,330 |
| Comparative Example 1 | 8,638 | 8,638 | 8,638 | - | - |
| Comparative Example 2 | 8,642 | 2,764 | 8,638 | 2,734 | 2,734 |
| Comparative Example 3 | 27,782 | 27,782 | 27,598 | - | - |
| Comparative Example 4 | 27,776 | 1,020 | 27,598 | 2,734 | 20,979 |
| Comparative Example 5 | 27,749 | 9,644 | 27,598 | 2,734 | 14,046 |
| *In Comparative Examples 1 and 3, as the washing process was not performed, the LiOH content after washing was listed with an LiOH content in the positive electrode active material, which is the final product. |||||

Experimental Example 2. Evaluation of electrochemical properties of lithium secondary battery

Charge and discharge capacities were measured through charge/discharge experiments performed on the lithium secondary battery (coin cell) manufactured in Preparation Example 2 using an electrochemical analyzer (Toyo, Toscat-3100) at 25 °C in a voltage range of 3.0V to 4.3V with a discharging rate of 0.1C.

In addition, 50 cycles of charging/discharging were performed on the same lithium secondary battery at 25 °C, within a driving voltage range of 3.0V to 4.4V under a 1C/1C condition, and the ratio of the discharge capacity at the 50th cycle to the initial capacity (cycle capacity retention) was measured.

The measurement results are shown in Table 4 below.

[Table 4]

| Classification | Charge capacity (mAh/g) | Discharge capacity (mAh/g) | Charge/discharge efficiency (%) | Lifetime efficiency (%) R.T., 4.4V | Lifetime efficiency (%) H.T., 4.3V |
|---|---|---|---|---|---|
| Example 1 | 243.1 | 223.5 | 91.5 | 91.8 | 91.8 |
| Example 2 | 244.1 | 221.6 | 90.8 | 91.9 | 90.7 |
| Example 3 | 238.7 | 214.1 | 89.7 | 93.4 | 92.0 |
| Example 4 | 243.5 | 224.7 | 92.3 | 84.1 | 88.0 |
| Example 5 | 243.3 | 221.7 | 91.1 | 92.0 | 91.8 |
| Example 6 | 243.2 | 220.7 | 90.7 | 91.5 | 91.7 |
| Comparative Example 1 | 240.8 | 219.8 | 91.3 | 90.5 | 88.1 |
| Comparative Example 2 | 239.5 | 210.9 | 88.1 | 88.1 | 86.5 |
| Comparative Example 3 | 241.5 | 219.2 | 90.8 | 91.6 | 91.0 |
| Comparative Example 4 | 242.1 | 221.2 | 91.4 | 72.4 | 70.1 |
| Comparative Example 5 | 243.2 | 218.7 | 90.5 | 90.1 | 89.7 |
| *R.T.: room temperature H.T.: high temperature | | | | | |

Experimental Example 3. Evaluation of stability of positive electrode active material and lithium secondary battery

(1) Evaluation of thermal stability of positive electrode active material

To evaluate the thermal stability of the positive electrode active material prepared according to Preparation Example 1, weight loss was measured using a thermogravimetric analyzer (TA Instruments, Q20) under normal pressure in an Ar atmosphere from 25 to 350 °C at a temperature increase rate of 10 °C/min. Here, the on-set temperature at which the weight loss (thermal decomposition) peak appears in each positive electrode active material is shown in Table 5 below.

Table 5

| Classification | On-set Temp. (°C) |
|---|---|
| Example 1 | 235.7 |
| Example 2 | 232.2 |
| Example 3 | 235.8 |
| Example 4 | 231.2 |
| Example 5 | 233.4 |

(continued)

| Classification | On-set Temp. (°C) |
| --- | --- |
| Example 6 | 236.7 |
| Comparative Example 1 | 230.1 |
| Comparative Example 2 | 232.1 |
| Comparative Example 3 | 231.2 |
| Comparative Example 4 | 228.1 |
| Comparative Example 5 | 230.1 |

Referring to the results in Table 5, it can be confirmed that the thermal decomposition on-set temperatures of the positive electrode active materials active materials according to Examples 1 to 6 are higher than that of the positive electrode active materials according to Comparative Examples 1 to 5.

Particularly, as shown in Table 4, in the lithium secondary batteries using the positive electrode active materials according to Comparative Examples 3 and 5, although some indicators indicating the electrochemical properties are at similar levels to that of the lithium secondary batteries using the positive electrode active materials according to Examples 1 to 6, as shown in Table 5, it can be seen that the thermal stability of the positive electrode active materials is insufficient (Comparative Example 3 shows a similar level to Example 4 in which the most severe washing conditions among Examples were applied).

(2) Measurement of amount of gas generation of lithium secondary battery

The lithium secondary battery manufactured according to Preparation Example 2 was charged to 4.25V with a constant current of 0.2 C and stored at 60 °C for 14 days to measure the volumetric change of the lithium secondary battery caused by gas generation in the lithium secondary battery. The volumetric change measurement results are shown in Table 6 below.

Table 6

| Classification | Volumetric change rate (%) |
| --- | --- |
| Example 1 | 3.1 |
| Example 2 | 4.2 |
| Example 3 | 3.2 |
| Example 4 | 3.8 |
| Example 5 | 3.3 |
| Example 6 | 3.8 |
| Comparative Example 1 | 6.2 |
| Comparative Example 2 | 5.8 |
| Comparative Example 3 | 4.8 |
| Comparative Example 4 | 6.4 |
| Comparative Example 5 | 5.1 |

Referring to the result in Table 6, it can be confirmed that the volumetric changes during high temperature storage of lithium secondary batteries using the positive electrode active materials according to Examples 1 to 6 among the lithium secondary batteries manufactured according to Preparation Example 2 are smaller than that of lithium secondary batteries using the positive electrode active materials according to Comparative Examples 1 to 5.

Particularly, as described in Table 4, it can be confirmed that the lithium secondary batteries using the positive electrode active materials according to Comparative Examples 3 and 5 show similar levels in some indicators indicating electrochemical properties, but as shown in Table 6, exhibit insufficient high temperature storage stability, compared to the lithium secondary batteries using the positive electrode active materials according to Examples 1 to 6.

In the above, the embodiments of the present invention have been described, but it will be understood by those of ordinary skill in the art that the present invention may be changed and modified in various ways by addition, alteration, or deletion of components without departing from the spirit of the present invention defined in the appended claims.

**Claims**

1. A positive electrode active material consisting of a lithium composite oxide comprising primary particles containing at least Li, Ni and B and secondary particles in which the primary particles are aggregated,

   wherein a coating layer containing a boron-containing oxide is present on at least a part of the surface of the secondary particle, and
   at least a part of the coating layer is removed from the surface of the secondary particle.

2. The positive electrode active material of claim 1, wherein the primary particles are represented by Formula 1 below:

   [Formula 1]     $Li_wNi_{1-(x+y+z+z')}Co_xB_yM1_zM2_{z'}O_2$

   (Here,

   M1 is at least one selected from Mn and Al,
   M2 is at least one selected from Mn, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd and Cu,
   M1 and M2 are different elements,
   $0.5 \leq w \leq 1.5$, $0 \leq x \leq 0.50$, $0 < y \leq 0.20$, $0 \leq z \leq 0.20$, and $0 \leq z' \leq 0.20$).

3. The positive electrode active material of claim 1, wherein the coating layer contains at least one boron-containing oxide represented by Formula 2 below:

   [Formula 2]     $Li_aB_bO_c$

   (Here, $0 \leq a \leq 8$, $0 < b \leq 8$, and $2 \leq c \leq 13$).

4. The positive electrode active material of claim 1, wherein the coating layer further comprises at least one metal oxide represented by Formula 3 below:

   [Formula 3]     $Li_dM3_eO_f$

   (Here,

   M3 is at least one selected from Ni, Mn, Co, Fe, Cu, Nb, Mo, Ti, Al, Cr, Zr, Zn, Na, K, Ca, Mg, Pt, Au, P, Eu, Sm, W, Ce, V, Ba, Ta, Sn, Hf, Ce, Gd and Nd,
   $0 \leq d \leq 8$, $0 < e \leq 8$, and $2 \leq f \leq 13$).

5. The positive electrode active material of claim 1, wherein the coating layer is formed by thermal treatment of a mixture of a precursor of the lithium composite oxide and a boron-containing raw material.

6. The positive electrode active material of claim 1, wherein at least a part of the coating layer is removed from the surface of the secondary particle through washing of the lithium composite oxide.

7. The positive electrode active material of claim 6, wherein the content of residual boron in the lithium composite oxide after washing of the lithium composite oxide is 0.3 mol% or less.

8. The positive electrode active material of claim 1, wherein the amount of LiOH elution measured by neutralization titration using HCl for the positive electrode active material satisfies Equation 1 below:

[Equation 1]

$$r < (19{,}153 \times x1) + x2$$

(Here,

x1 is the content (mol%) of boron in the lithium composite oxide before washing,

x2 is the amount (ppm) of LiOH converted from the HCl consumption corresponding to the x-axis value of a first peak appearing at the smallest x-axis value in the differential graph shown by differentiating the pH value with respect to the amount of HCl input by the neutralization titration for the lithium composite oxide before washing, and

r is the elution amount (ppm) of LiOH for the lithium composite oxide after washing).

9. The positive electrode active material of claim 1, wherein the amount of LiOH elution measured by neutralization titration using HCl for the positive electrode active material satisfies Equation 2 below:

[Equation 2]

$$y1 \leq r \leq y1 + (y2 \times (1 - y3) \times 18{,}429)$$

(Here,

y1 is the amount (ppm) of LiOH converted from the HCl consumption corresponding to the x-axis value of a first peak appearing at the smallest x-axis value in the differential graph shown by differentiating the pH value with respect to the amount of HCl input by the neutralization titration for the lithium composite oxide after washing,

y2 is the content (mol%) of boron in the lithium composite oxide before washing,

y3 is the change rate of the content of boron in the lithium composite oxide before and after washing, and has a value greater than 0 and less than or equal to 0.90, and

r is the elution amount (ppm) of LiOH for the lithium composite oxide after washing).

10. The positive electrode active material of claim 6, wherein, for the lithium composite oxide, a ratio of the porosity in the secondary particle after washing/the porosity in the secondary particle before washing is 1.7 or more.

11. A positive electrode comprising the positive electrode active material according to any one of claims 1 to 10.

12. A lithium secondary battery using the positive electrode of claim 11.

FIG. 1

FIG. 2

## INTERNATIONAL SEARCH REPORT

| International application No. |
| --- |
| **PCT/KR2021/007318** |

**A. CLASSIFICATION OF SUBJECT MATTER**

**H01M 4/36**(2006.01)i; **H01M 4/62**(2006.01)i; **H01M 4/525**(2010.01)i; **H01M 4/505**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 4/36(2006.01); C01G 53/00(2006.01); H01M 10/052(2010.01); H01M 4/04(2006.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬(lithium), 니켈(nickel), 붕소(boron), 1차 입자(primary particle), 2차 입자 (secondary particle), 코팅층(coating layer), H3BO3, 수세(washing), 양극 활물질(positive active material)

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2019-0059249 A (LG CHEM, LTD.) 30 May 2019 (2019-05-30) <br> See paragraphs [0027]-[0034], [0061], [0077], [0084], [0118], [0146], [0219] and [0220]; and claims 1 and 11. | 1-12 |
| A | WO 2019-132332 A1 (POSCO et al.) 04 July 2019 (2019-07-04) <br> See entire document. | 1-12 |
| A | JP 2019-192325 A (PANASONIC IP MANAGEMENT CORP.) 31 October 2019 (2019-10-31) <br> See entire document. | 1-12 |
| A | US 2017-0373309 A1 (NICHIA CORPORATION) 28 December 2017 (2017-12-28) <br> See entire document. | 1-12 |
| PX | JP 2020-102432 A (SUMITOMO METAL MINING CO., LTD.) 02 July 2020 (2020-07-02) <br> See paragraphs [0146]-[0150] and [0160]; and claims 1, 5, 6, 8 and 12. | 1-12 |

☐ Further documents are listed in the continuation of Box C.  ☑ See patent family annex.

| | |
| --- | --- |
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **14 September 2021** | **14 September 2021** |

| Name and mailing address of the ISA/KR | Authorized officer |
| --- | --- |
| **Korean Intellectual Property Office** <br> **Government Complex-Daejeon Building 4, 189 Cheongsa-** <br> **ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2021/007318**

| Patent document cited in search report | | | Publication date (day/month/year) | Patent family member(s) | | | Publication date (day/month/year) |
|---|---|---|---|---|---|---|---|
| KR | 10-2019-0059249 | A | 30 May 2019 | CN | 110431695 | A | 08 November 2019 |
| | | | | EP | 3595060 | A1 | 15 January 2020 |
| | | | | EP | 3595060 | B1 | 24 February 2021 |
| | | | | JP | 2020-515010 | A | 21 May 2020 |
| | | | | US | 2020-0161650 | A1 | 21 May 2020 |
| | | | | WO | 2019-103488 | A1 | 31 May 2019 |
| | | | | WO | 2019-103488 | A8 | 31 May 2019 |
| WO | 2019-132332 | A1 | 04 July 2019 | CN | 111771303 | A | 13 October 2020 |
| | | | | EP | 3734720 | A1 | 04 November 2020 |
| | | | | JP | 2021-509220 | A | 18 March 2021 |
| | | | | KR | 10-2019-0078498 | A | 04 July 2019 |
| | | | | KR | 10-2177049 | B1 | 10 November 2020 |
| JP | 2019-192325 | A | 31 October 2019 | WO | 2018-043189 | A1 | 08 March 2018 |
| US | 2017-0373309 | A1 | 28 December 2017 | JP | 2015-133318 | A | 23 July 2015 |
| | | | | JP | 2019-106379 | A | 27 June 2019 |
| | | | | JP | 6524651 | B2 | 05 June 2019 |
| | | | | JP | 6743920 | B2 | 19 August 2020 |
| | | | | US | 10490810 | B2 | 26 November 2019 |
| | | | | US | 2015-0171424 | A1 | 18 June 2015 |
| | | | | US | 9793540 | B2 | 17 October 2017 |
| JP | 2020-102432 | A | 02 July 2020 | None | | | |

Form PCT/ISA/210 (patent family annex) (July 2019)